# FASCICULE DE BREVET EUROPEEN

(11) **EP 3 891 372 B1**
(45) Date de publication et mention de la délivrance du brevet: **23.11.2022**
(21) Numéro de dépôt: 19809856.8
(22) Date de dépôt: 03.12.2019
(51) Int. Cl.: F02C 7/045, F02C 7/047

(54) **ENTRÉE D'AIR ET PROCÉDÉ DE DÉGIVRAGE D'UNE ENTRÉE D'AIR D'UNE NACELLE D'UN TURBORÉACTEUR D'AÉRONEF**
LUFTEINLASS UND VERFAHREN ZUR ENTEISUNG EINES LUFTEINLASSES EINER GONDEL EINES FLUGZEUGSTRAHLTRIEBWERKS
AIR INTAKE AND METHOD FOR DE-ICING AN AIR INTAKE OF A NACELLE OF AN AIRCRAFT JET ENGINE

(30) Priorité: 04.12.2018 FR 1872268
(43) Date de publication de la demande: 13.10.2021
(73) Titulaire: Safran Nacelles, 76700 Gonfreville-l'Orcher (FR)
(72) Inventeur: HURLIN, Hervé Léopold, 77550 MOISSY-CRAMAYEL (FR)
(74) Mandataire: Argyma
(86) Numéro de dépôt international: PCT/EP2019/083371
(87) Numéro de publication internationale: WO 2020/114988

(56) Documents cités:
- EP-A1- 1 232 945
- EP-B1- 1 232 945
- FR-A1- 3 023 538
- US-A- 2 668 596
- US-A- 3 933 327
- US-A1- 2017 298 821

## Description

### DOMAINE TECHNIQUE ET OBJET DE L'INVENTION

La présente invention concerne le domaine des turboréacteurs d'aéronef et vise plus particulièrement un dispositif de dégivrage d'une entrée d'air d'une nacelle d'un turboréacteur d'aéronef.

### ETAT DE LA TECHNIQUE

De manière connue, un aéronef comporte un ou plusieurs turboréacteurs pour permettre sa propulsion par accélération d'un flux d'air qui circule d'amont en aval dans le turboréacteur.

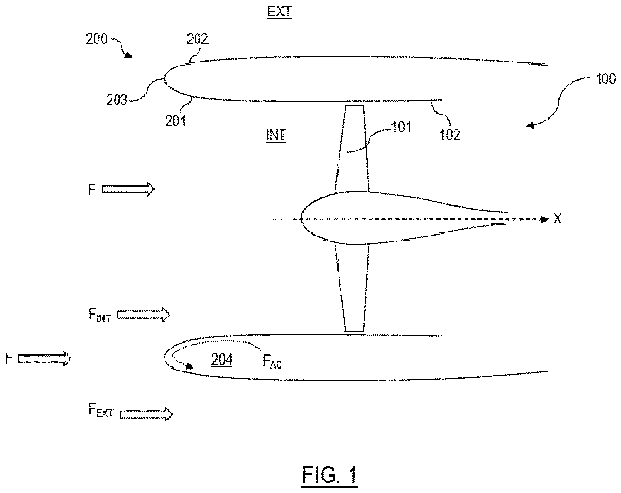

En référence à la figure 1, il est représenté un turboréacteur 100 s'étendant selon un axe X et comportant une soufflante 101 montée rotative autour de l'axe X dans une virole extérieure 102 afin d'accélérer un flux d'air F d'amont vers l'aval. Par la suite, les termes amont et aval sont définis par rapport à la circulation du flux d'air F. Le turboréacteur 100 comporte à son extrémité amont une entrée d'air 200 comportant une paroi intérieure 201 tournée vers l'axe X et une paroi extérieure 202 qui est opposée à la paroi intérieure 201, les parois 201, 202 sont reliées par un bord d'attaque 203 également appelé « lèvre de l'entrée d'air ». Ainsi, l'entrée d'air 200 permet de séparer le flux d'air entrant F en un flux d'air intérieur FINT guidé par la paroi intérieure 201 et un flux d'air extérieur FEXT guidé par la paroi extérieure 202. Par la suite, les termes intérieur et extérieur sont définis radialement par rapport à l'axe X du turboréacteur 100.

De manière connue, lors du vol d'un aéronef, du fait des conditions de température et de pression, du givre est susceptible de s'accumuler au niveau du bord d'attaque 203 et de la paroi intérieure 201 de l'entrée d'air 200 et de former des blocs de givre qui sont susceptibles d'être ingérés par le turboréacteur 100. De telles ingestions doivent être évitées afin d'améliorer la durée de vie du turboréacteur 100 et réduire les dysfonctionnements.

Pour éliminer l'accumulation de givre, en référence à la figure 1, il est connu de faire circuler un flux d'air chaud FAC dans une cavité intérieure 204 formée entre la paroi intérieure 201 et la paroi extérieure 202 de l'entrée d'air 200. Une telle circulation d'air chaud permet, par conduction thermique, de chauffer la paroi intérieure 201 et ainsi éviter l'accumulation de givre qui fond au fur et à mesure de son accumulation. Une telle circulation d'un flux d'air chaud FAC demeure complexe étant donné que l'entrée d'air 200 peut remplir également une fonction acoustique et peut comporter généralement une structure alvéolaire sur sa paroi intérieure 201. A cet effet, il a été proposé par la demande de brevet FR2912781 et la demande de brevet WO2015/071609 de prévoir des canaux de circulation d'un flux d'air chaud dans la structure alvéolaire. Le document US3933327A divulgue une autre entrée d'air d'une nacelle de turboréacteur d'aéronef comportant un dispositif de dégivrage.

De manière incidente, on connaît également un dispositif de dégivrage qui comporte des ouvertures traversantes dans la paroi intérieure et extérieure pour éjecter le flux d'air chaud. Une telle solution technique n'est pas retenue étant donné qu'elle consomme une énergie importante car l'air est éjecté ponctuellement et ne réalise qu'un dégivrage imparfait.

On connait également une paroi intérieure d'entrée d'air comportant des ouvertures traversantes, réparties uniformément sur la paroi intérieure, afin de souffler un flux d'air chaud radialement vers l'extérieur de la paroi intérieure, dans la veine d'air du moteur. En pratique, le nombre élevé d'ouvertures traversantes augmente de manière importante la consommation d'air chaud et pénalise le traitement acoustique. Cela est particulièrement problématique pour un turboréacteur à fort taux de dilution qui possède une entrée d'air de grand diamètre. De plus, l'efficacité du soufflage n'est pas optimale étant donné que plusieurs ouvertures traversantes sont alignées parallèlement à l'axe du turboréacteur, ce qui abaisse l'efficacité du chauffage lors de la circulation d'un flux d'air incident d'amont vers l'aval en regard de deux ouvertures traversantes alignées parallèlement à l'axe X du fait des équilibres de pression. La consommation d'air chaud est ainsi élevée. En outre, la surface située entre deux alignements d'ouvertures traversantes est insuffisamment chauffée, ce qui affecte la qualité du dégivrage. Un des objectifs de la présente invention est de permettre d'empêcher toute accumulation de givre tout en permettant un traitement acoustique efficace et économique.

De plus, un autre objectif est de proposer une entrée d'air qui présente les avantages précités tout en étant simple et peu onéreuse à fabriquer.

### PRESENTATION GENERALE DE L'INVENTION

A cet effet, l'invention concerne un dispositif de dégivrage pour une entrée d'air d'une nacelle de turboréacteur d'aéronef s'étendant selon un axe X dans lequel circule un flux d'air d'amont vers l'aval, l'entrée d'air s'étendant de manière annulaire autour de l'axe X et comportant une paroi intérieure tournée vers l'axe X et une paroi extérieure qui est opposée à la paroi intérieure, les parois étant reliées par un bord d'attaque et une cloison interne avant de manière à délimiter une cavité annulaire, le dispositif de dégivrage comportant au moins une source d'air chaud dans la cavité annulaire.

L'invention est remarquable en ce que la paroi intérieure comporte une pluralité de lignes de soufflage, chaque ligne de soufflage comportant une pluralité d'ouvertures traversantes configurées pour souffler des flux élémentaires issus de la source d'air chaud afin de dégivrer ladite paroi intérieure, les lignes de soufflage étant parallèles entre elles dans un plan de projection cylindrique défini par rapport à l'axe X du turboréacteur et à un axe Y définissant la position angulaire par rapport à l'axe X, chaque ligne de soufflage ayant une profondeur P3 définie selon l'axe X et une longueur L3 définie selon l'axe Y dans le plan de projection cylindrique, deux lignes de soufflage adjacentes étant écartées d'une distance D3 selon l'axe Y, le rapport des distances L3/D3 est compris entre 1 et 2.

Ainsi, contrairement à l'art antérieur qui prévoyait de disposer des ouvertures de soufflage de manière répartie et homogène à la surface de la paroi intérieure, l'invention se propose avantageusement de les organiser en lignes en les espaçant de manière à limiter tout recouvrement ou chevauchement excessif. De manière avantageuse, chaque ligne de courant circulant d'amont en aval sur la paroi intérieure entre en contact avec au moins une ligne de soufflage, ce qui garantit un dégivrage efficace. De plus, le rapport des distances L3/D3 limite tout recouvrement excessif, ce qui limite le nombre des ouvertures traversantes destinées au soufflage. Le dégivrage est ainsi plus économique, ce qui est avantageux pour un turboréacteur à fort taux de dilution qui possède une entrée d'air de grand diamètre.

De manière préférée, chaque ligne de soufflage étant écartée d'un angle d'inclinaison θ par rapport à l'axe X dans le plan de projection cylindrique, l'angle d'inclinaison est compris entre 20° et 70°. Un tel angle d'inclinaison permet d'assurer un compromis entre efficacité et économie. Plus l'angle d'inclinaison est faible, plus le nombre de lignes de soufflage est important et le dégivrage efficace.

De manière préférée, chaque ligne de soufflage comporte au moins 5 ouvertures traversantes, de préférence, au moins 10 ouvertures traversantes, de préférence au moins 15. Un grand nombre d'ouvertures traversantes est optimal pour un turboréacteur. En outre, il permet de définir un rapport des distances L3/D3 qui est pertinent pour un turboréacteur.

De préférence, les ouvertures traversantes d'une même ligne de soufflage sont écartées d'un premier pas Px selon l'axe X. Les ouvertures traversantes, à une même position longitudinale selon l'axe X, sont écartées d'un deuxième pas Py selon l'axe Y selon la relation suivante : Py = Px * α avec α une constante supérieure à 2, de préférence, à 5, de préférence encore, à 10. De tels pas permettent de mettre en avant que les ouvertures traversantes ne sont pas réparties de manière homogène mais organisées selon des lignes.

De manière préférée, la paroi intérieure comprend au moins une zone de chevauchement ZP des lignes de soufflage, la zone de chevauchement ZP comprenant au moins une ligne de soufflage amont et une ligne de soufflage aval. Ainsi, un chevauchement permet à deux lignes de soufflage d'agir sur une même portion angulaire de l'entrée d'air.

Selon un aspect, la ligne de soufflage aval ne comporte pas d'ouvertures traversantes dans la zone de chevauchement ZP. Autrement dit, seule la ligne de soufflage amont comporte des ouvertures traversantes dans la zone de chevauchement ZP. Cela permet d'assurer un dégivrage en aval du fait de la circulation des lignes de courant tout en limitant le nombre d'ouvertures traversantes.

Selon un autre aspect, les ouvertures traversantes sont alternées selon la direction Y entre la ligne de soufflage amont et la ligne de soufflage aval. Ainsi, on évite avantageusement que deux ouvertures traversantes de deux lignes de soufflage différentes ne soient traversées par une même ligne de courant, les performances du dégivrage n'étant alors pas affectées.

De manière préférée, la densité d'ouvertures traversantes est constante selon la direction Y. Ainsi, que les lignes de soufflage se chevauchent ou non, la même quantité d'air chaud est sensiblement délivrée de manière périphérique. La présence d'ouvertures traversantes pour le soufflage à différentes positions selon l'axe X permet de réaliser un dégivrage global.

De préférence, la paroi intérieure comportant au moins une structure d'atténuation acoustique comportant une pluralité d'orifices d'atténuation acoustique, les orifices d'atténuation acoustique sont répartis sur la paroi intérieure en dehors des lignes de soufflage. Ainsi, la paroi intérieure aménage, d'une part, des ouvertures traversantes pour le chauffage et, d'autre part, des orifices pour l'atténuation acoustique. Grâce à l'invention, le nombre d'ouvertures traversantes dédiées au soufflage est avantageusement réduit, ce qui permet de maximiser le nombre d'orifices d'atténuation acoustique et, donc, les performances acoustiques.

De manière préférée, la structure alvéolaire définit, d'une part, des cellules acoustiques comportant chacune au moins un orifice d'atténuation acoustique et, d'autre part, des canaux de circulation formant les lignes de soufflage et comportant les ouvertures traversantes de soufflage. Ainsi, les lignes de soufflage se présentent sous la forme de canaux de conduction d'air chaud qui sont percés par des ouvertures traversantes afin de permettre le soufflage. Une ligne de soufflage permet ainsi, même en l'absence d'ouvertures traversantes, de chauffer la paroi intérieure par conduction thermique.

De préférence, chaque ouverture traversante possède une section supérieure à 3mm2 afin de permettre un soufflage efficace. De préférence encore, deux ouvertures traversantes adjacentes d'une ligne de soufflage sont écartées d'une distance définie selon l'axe Y comprise entre 1 à 2,5 fois le diamètre d'une ouverture traversante. Cela permet d'éviter la formation de portions de paroi intérieure non chauffées entre deux ouvertures traversantes consécutives.

De préférence, chaque orifice d'atténuation acoustique possède un diamètre inférieur à 0,5mm afin de permettre une atténuation optimale.

L'invention concerne également une entrée d'air comportant un dispositif de dégivrage tel que présenté précédemment. L'invention concerne également une nacelle comportant une entrée d'air telle que présentée précédemment. L'invention concerne également un turboréacteur comportant une nacelle telle que présentée précédemment.

L'invention concerne en outre un procédé de dégivrage, au moyen d'un dispositif de dégivrage tel que présenté précédemment, d'une entrée d'air d'une nacelle de turboréacteur d'aéronef s'étendant selon un axe X dans lequel circule un flux d'air d'amont vers l'aval, l'entrée d'air s'étendant de manière annulaire autour de l'axe X et comportant une paroi intérieure tournée vers l'axe X et une paroi extérieure qui est opposée à la paroi intérieure, le procédé comportant une étape de soufflage d'une pluralité de flux élémentaires issus de la source d'air chaud par les ouvertures traversantes des lignes de soufflage de manière à dégivrer la paroi intérieure.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
Figure lest une représentation schématique en coupe longitudinale d'un turboréacteur d'aéronef et d'une entrée d'air selon l'art antérieur,
Figure 2 est une représentation schématique en coupe longitudinale d'un turboréacteur d'aéronef et d'une entrée d'air selon une forme de réalisation de l'invention,
Figure 3 est une vue de face d'une entrée d'air selon une forme de réalisation de l'invention,
Figure 4 est une vue rapprochée de l'entrée d'air de la figure 3,
Figure 5 est une projection cylindrique de la paroi intérieure de l'entrée d'air avec deux lignes de soufflage sans chevauchement,
Figure 6A est une vue rapprochée des ouvertures traversantes d'une ligne de soufflage de la figure 5 et des orifices d'atténuation acoustique,
Figure 6B est une vue en coupe radiale par rapport à l'axe X d'une paroi intérieure,
Figure 7 est une vue en coupe axiale d'une entrée d'air dans une zone de chevauchement des lignes de soufflage,
Figure 8 est une projection cylindrique de la paroi intérieure de l'entrée d'air avec deux lignes de soufflage avec chevauchement,
Figure 9 est une projection cylindrique de la paroi intérieure de l'entrée d'air avec deux lignes de soufflage avec chevauchement, une ligne de soufflage ne comprenant pas d'ouvertures traversantes dans la zone de chevauchement,
Figure 10 est une projection d'une autre forme de réalisation d'une paroi intérieure de l'entrée d'air avec deux lignes de soufflage avec chevauchement, les ouvertures traversantes des lignes de soufflage étant alternées entre les lignes de soufflage dans la zone de chevauchement,
Figure 11 est une vue de face d'une entrée d'air selon une autre forme de réalisation de l'invention comprenant deux ensembles de lignes de soufflage avec des angles d'inclinaison différents et
Figure 12 est une vue rapprochée de l'entrée d'air de la figure 11.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE D'UNE FORME DE REALISATION DE L'INVENTION

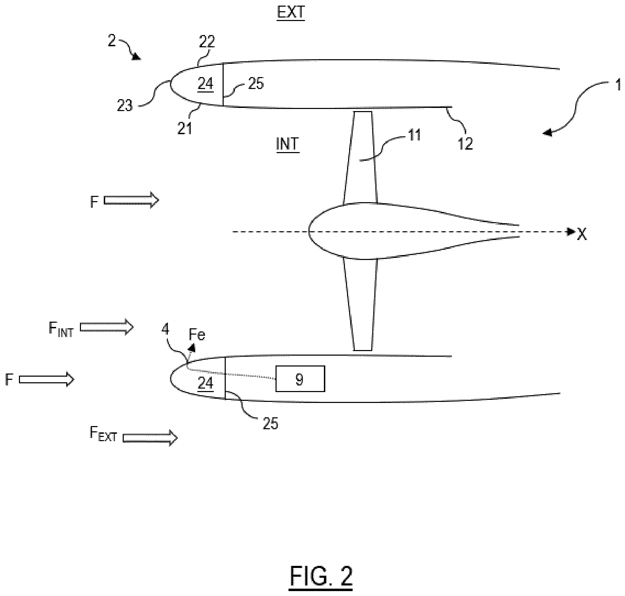

En référence à la figure 2, il est représenté un turboréacteur 1 s'étendant selon un axe X et comportant une soufflante 11 montée rotative autour de l'axe X dans une virole extérieure 12 afin d'accélérer un flux d'air F d'amont vers l'aval. Par la suite, les termes amont et aval sont définis par rapport à la circulation du flux d'air F. Le turboréacteur 1 comporte à son extrémité amont une entrée d'air 2 comportant une paroi intérieure 21 tournée vers l'axe X et une paroi extérieure 22 qui est opposée à la paroi intérieure 21, les parois 21, 22 sont reliées par un bord d'attaque 23 connu de l'homme du métier sous la désignation de « lèvre ». L'entrée d'air 2 comporte en outre une cloison interne avant 25 de manière à délimiter une cavité annulaire 24 connue de l'homme du métier sous la désignation anglaise « D-Duct ».

Ainsi, l'entrée d'air 2 permet de séparer le flux d'air entrant F en un flux d'air intérieur F_{INT} guidé par la paroi intérieure 21 et un flux d'air extérieur F_{EXT} guidé par la paroi extérieure 22. Par la suite, les termes intérieur et extérieur sont définis radialement par rapport à l'axe X du turboréacteur 1.

De manière connue, lors du vol d'un aéronef, du fait des conditions de température et de pression, du givre est susceptible de s'accumuler au niveau de la paroi intérieure 21 et du bord d'attaque 23 de l'entrée d'air 2 et de former des blocs de givre qui sont susceptibles d'être ingérés par le turboréacteur 1. De telles ingestions doivent être évitées afin d'améliorer la durée de vie du turboréacteur et réduire les dysfonctionnements.

En référence à la figure 2, l'entrée d'air 2 comporte une source d'air chaud 9 montée dans la cavité annulaire 24. La source d'air chaud 9 se présente de manière préférée sous la forme d'une alimentation en air chaud issu du turboréacteur 1, qui peut être un tube piccolo ou une circulation d'un flux d'air circulaire généré par une buse connue sous sa désignation anglaise « swirl », afin de fournir un flux d'air chaud sous pression à une température de l'ordre de 250°C. Une telle source d'air chaud 9 est connue de l'art antérieur et ne sera pas présentée plus en détails.

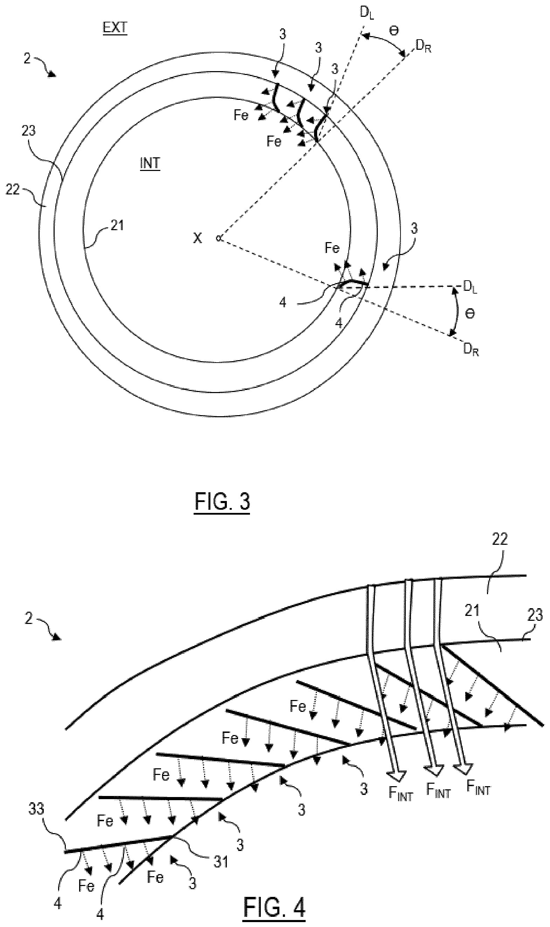

Afin de permettre un dégivrage optimal, comme illustré aux figures 3 à 4, la paroi intérieure 21 comporte une pluralité de lignes de soufflage 3, chaque ligne de soufflage 3 comportant une pluralité d'ouvertures traversantes 4 configurées pour souffler respectivement des flux élémentaires Fe issus de la source d'air chaud 9 afin de dégivrer ladite paroi intérieure 21.

De tels flux élémentaires Fe sont avantageux étant donné qu'ils permettent, d'une part, de décoller par soufflage des particules de givre accumulées directement sur les ouvertures traversantes 4 et, d'autre part, de chauffer la paroi intérieure 21 lors de la circulation du flux élémentaire Fe après son éjection d'une ouverture traversante 4.

En particulier, un flux élémentaire Fe permet de chauffer une portion de la paroi intérieure 21 qui est située en aval de l'ouverture traversante 4 dont il est éjecté. En effet, le flux d'air intérieur F_{INT} circulant dans le turboréacteur 1 entraine chaque flux élémentaire Fe selon une direction axiale X vers l'aval, appelée ligne de courant. Le flux élémentaire Fe permet avantageusement de distribuer des calories à la paroi intérieure 21 au fur et à mesure de sa circulation vers l'aval, ce qui permet d'éviter toute accumulation de givre. Le dégivrage est ainsi global même si les ouvertures traversantes 4 sont peu nombreuses.

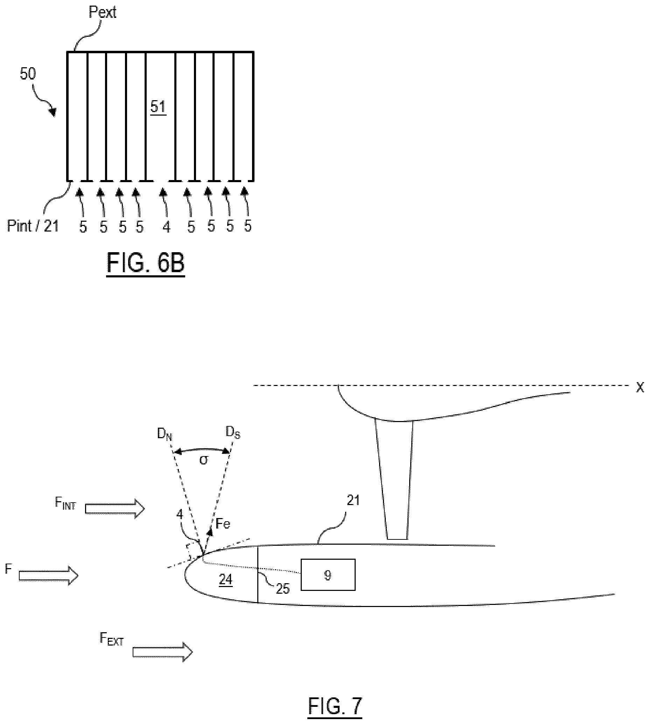

De manière préférée, la paroi intérieure 21 peut comporter, en dehors, des lignes de soufflage 3, des zones de traitement acoustique. Les zones de traitement acoustique comportent, de préférence, une structure alvéolaire de réduction de bruit 50 comme illustré à la figure 6B. De manière connue, la structure alvéolaire 50 présente ainsi une peau intérieure Pint et une peau extérieure Pext, écartées l'une de l'autre, de manière à former des cellules, notamment du type Helmholtz. De manière connue, la peau intérieure Pint de la structure alvéolaire 50 appartient à la paroi intérieure 21 de l'entrée d'air 2.

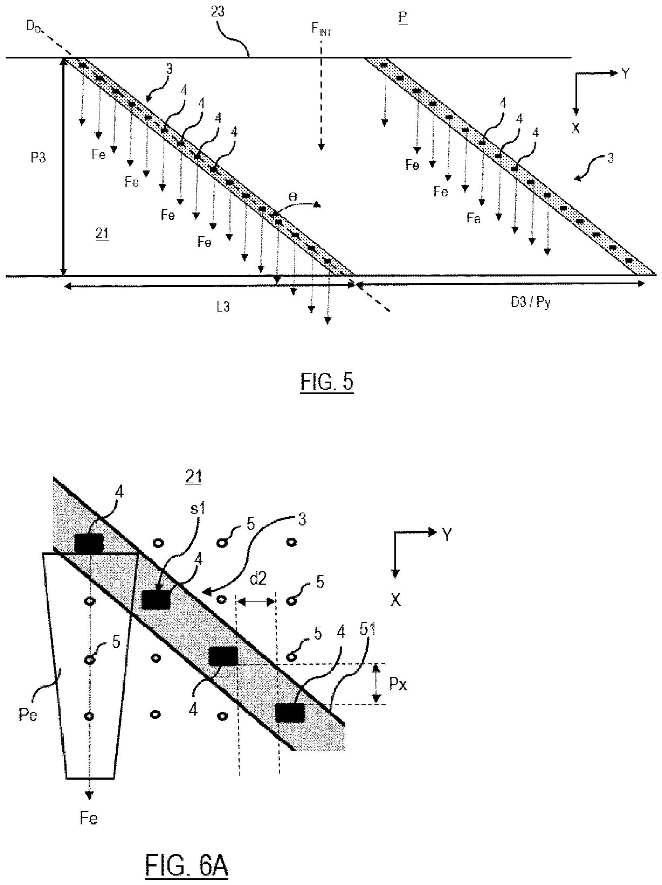

De préférence, la paroi intérieure 21, c'est-à-dire, la peau intérieure Pint de la structure alvéolaire 50, comporte une pluralité d'orifices d'atténuation acoustique 5 permettant l'entrée d'ondes acoustiques dans les cellules de la structure alvéolaire 50 afin de permettre leur atténuation. En référence à la figure 6A, il est représenté une paroi intérieure 21 avec des ouvertures traversantes 4 destinées au soufflage et des orifices traversants 5 destinés à l'atténuation acoustique. De manière préférée, comme illustré à la figure 6B, les cellules sont borgnes, c'est-à-dire ne comportent qu'un unique orifice 5, afin de permettre une atténuation acoustique optimale. De manière préférée, les lignes de soufflage 3 se présentent sous la forme de canaux 51 formés dans la structure alvéolaire 50 qui permettent de conduire de l'air chaud et de souffler des flux élémentaires Fe via les ouvertures traversantes 4. Ainsi, le dégivrage est réalisé par soufflage mais également par conduction thermique.

Un orifice d'atténuation acoustique 5 possède ainsi une fonction différente d'une ouverture traversante 4 destinée au soufflage. Une telle différence de fonction se traduit en outre par des différences structurelles. Un orifice d'atténuation acoustique 5 possède un diamètre réduit de préférence, inférieure à 0,5mm, par comparaison à une ouverture traversante 4 (présentée par la suite).

De manière préférée, les orifices d'atténuation acoustique 5 sont répartis sur la paroi intérieure 21 en dehors des ouvertures traversantes 4 afin de maximiser les performances de traitement acoustique.

Pour améliorer les performances de dégivrage, il est préférable d'augmenter la dimension et le nombre d'ouvertures traversantes 4. Néanmoins, plus la dimension et le nombre d'ouvertures traversantes 4 sont importants, plus le nombre d'orifices d'atténuation acoustique 5 est faible et plus les performances de traitement acoustique sont réduites. En outre, la consommation d'air chaud augmente également, ce qui pénalise les performances du turboréacteur 1. La réalisation d'ouvertures traversantes 4 résulte ainsi d'un compromis comme cela va être dorénavant présenté.

Comme illustré de manière schématique sur les figures 2 à 4, la paroi intérieure 21 de l'entrée d'air 2 n'est pas cylindrique, c'est-à-dire situé à une même distance radiale de l'axe X, mais incurvée pour des raisons aérodynamiques. Aussi, par souci de clarté et de concision, la paroi intérieure 21 va être présentée dans un plan de projection cylindrique P, c'est-à-dire situé à une même distance radiale de l'axe X, afin de définir les caractéristiques géométriques des lignes de soufflage 3.

En référence à la figure 5, le plan de projection cylindrique P est défini dans un repère orthogonal dans lequel l'axe X est l'axe du turboréacteur 1 et l'axe Y correspond à l'ouverture angulaire et varie entre -180° et + 180°.

Selon l'invention, en référence à la figure 5, les lignes de soufflage 3 sont parallèles entre elles dans le plan de projection cylindrique P. Chaque ligne de soufflage 3 est écartée d'un angle d'inclinaison θ par rapport à l'axe X dans le plan de projection cylindrique P, l'angle d'inclinaison θ étant compris entre 20° et 70°. Ainsi, comme illustré à la figure 5, du fait de l'angle d'inclinaison θ, un flux élémentaire Fe issue d'une ouverture traversante 4 ne circule pas sur une autre ouverture traversante 4 lors de sa circulation vers l'aval selon l'axe X. Cela permet d'éviter avantageusement toute perte d'efficacité due à un recouvrement lié à un soufflage multiple à une même distance radiale par rapport à l'axe X. L'efficacité du chauffage par les flux élémentaires Fe est améliorée étant donné que toutes les portions de la paroi intérieure 21 situées en aval des ouvertures traversantes 4 sont chauffées. Comme cela sera présenté par la suite, même si les ouvertures traversantes 4 sont distinctes les unes des autres, les flux élémentaires Fe permettent de chauffer la paroi intérieure 21 par convection mais également par conduction afin d'éviter toute apparition de givre.

L'angle d'inclinaison θ résulte d'un compromis entre l'efficacité du dégivrage et l'efficacité de l'atténuation acoustique 4. Un angle d'inclinaison θ, compris entre 35° et 55°, assure le meilleur compromis.

Par la suite, en référence à la figure 5, chaque ligne de soufflage possède une profondeur définie selon l'axe X désignée P3 et une longueur définie selon l'axe Y désignée L3. De manière préférée, la profondeur P3 correspond à la profondeur totale de la paroi intérieure 21 de l'entrée d'air 2. La longueur L3 peut se déduire de la profondeur P3 et de l'angle d'inclinaison θ par la formule trigonométrique suivante : cos θ =P3/L3

De manière préférée, en référence à la figure 5, afin de garantir un dégivrage homogène de la paroi intérieure 21, deux lignes de soufflage adjacentes 3 sont écartées d'une même distance d'espacement D3 définie selon l'axe Y.

De manière préférée, chaque ligne de soufflage 3 comporte au moins 5 ouvertures traversantes 4, de préférence, au moins 10 ouvertures traversantes 4, de préférence, au moins 15 ouvertures traversantes 4. Un grand nombre d'ouvertures traversantes 4 permet de définir de manière précise le rapport des distances L3/D3 qui n'est pas pertinent pour un faible nombre d'ouvertures traversantes 4 par ligne, par exemple 2 ou 3.

Un grand nombre d'ouvertures traversantes 4 permet en outre de dégivrer de manière optimale un turboréacteur, en particulier, dont le diamètre de soufflante varie entre 1000mm et 3000mm. De manière préférée, la profondeur P3 varie entre 120mm et 350mm.

Selon l'invention, le rapport des distances L3/D3 est compris entre 1 et 2, de préférence compris entre 1 et 1.5, de manière permettre un dégivrage uniforme de l'entrée d'air tout en limitant le chevauchement des lignes de soufflage 3 selon la direction Y afin d'éviter que des ouvertures traversantes 4 soient alignées selon l'axe X, ce qui pénaliserait les performances de dégivrage.

Il est représenté sur la figure 5 des lignes de soufflage 3 qui sont rectilignes mais il va de soi qu'elles pourraient être incurvées.

En référence à la figure 6A, il est représenté une ligne de soufflage 3 de manière rapprochée. De manière préférée, chaque ligne de soufflage 3 comporte une pluralité d'ouvertures traversantes 4. De préférence, chaque ouverture traversante 4 émet un flux élémentaire Fe d'air chaud qui circule vers l'aval du fait du flux d'air intérieur F_{INT}. En pratique, chaque flux élémentaire Fe permet de chauffer, par convection et conduction, une portion élémentaire Pe de la paroi intérieure en aval de l'ouverture traversante 4 et qui est fonction de la distance par rapport à l'ouverture traversante 4.

De manière préférée, chaque ouverture traversante 4 possède une section s1 supérieure à 3mm2 de manière à dégivrer de manière optimale. De manière préférée, la section s1 est comprise entre 3mm2 et 6mm2 de manière à assurer un compromis entre un dégivrage optimal et une limitation de la consommation d'air chaud.

De manière préférée, deux ouvertures traversantes 4 sont écartées d'une même distance d2, de préférence, comprise entre 1 à 2,5 le diamètre d'une ouverture traversante. Une densité d'ouvertures traversantes 4 selon l'axe Y, comprise entre 25% et 50%, assure un compromis entre les performances de dégivrage et d'atténuation acoustique. De manière préférée, la densité d'ouvertures traversantes 4 est sensiblement constante selon la direction Y. Par sensiblement constante, on entend une variation locale de moins de 10% par rapport à la densité moyenne.

En référence à la figure 6A, les ouvertures traversantes 4 d'une même ligne de soufflage 3 sont écartées d'un premier pas Px selon l'axe X. Les ouvertures traversantes 4 à une même position longitudinale selon l'axe X, sont écartées d'un deuxième pas Py selon l'axe Y selon la relation suivante : Py = Px * α avec α une constante supérieure à 2, de préférence, à 5, de préférence encore, à 10. Dans cet exemple, le deuxième pas Py correspond à la distance D3.

En effet, comme illustré à la figure 5, les ouvertures traversantes 4 sont réparties de manière irrégulière, ce qui s'oppose à l'art antérieur qui visait une répartition régulière et homogène.

En référence dorénavant à la figure 7, chaque ouverture traversante 4 comporte un axe d'émission D_{S} qui s'étend sensiblement selon l'axe normal D_{N} à la paroi intérieure 21 dans laquelle est formée localement l'ouverture traversante 4. De manière préférée, l'axe d'émission D_{S} est incliné vers l'aval par rapport à l'axe normal D_{N} d'un angle de soufflage σ. De manière préférée, des meilleures performances de dégivrage sont obtenues avec un angle de soufflage σ compris entre 0° et 30°.

Dans cet exemple de réalisation, il a été représenté de manière schématique des ouvertures traversantes 4 de forme rectangulaire mais il va de soi que d'autres formes pourraient convenir, notamment, des fentes, des ouvertures circulaires ou toute autre ouverture calibrée.

Comme expliqué précédemment, chaque ouverture traversante 4 possède une section de passage supérieure ou égale à 3 mm² de manière à fournir un flux élémentaire Fe efficace. Une telle ouverture traversante 4 se distingue de manière avantageuse d'un orifice d'atténuation acoustique 5, dont le diamètre est inférieur à 0.5 mm.

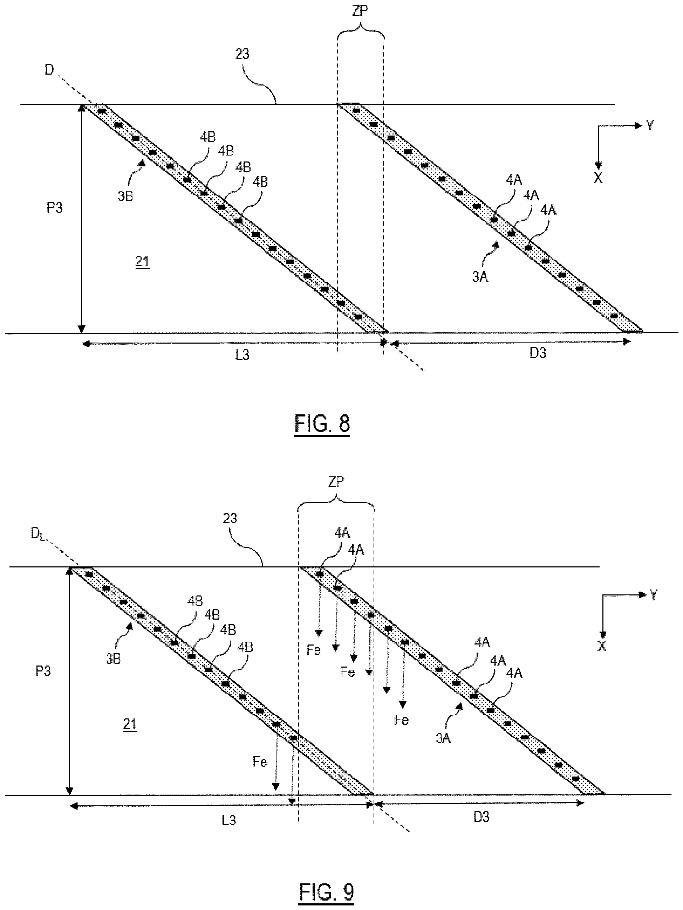

Selon un aspect de l'invention, en référence aux figures 8 à 10, la distance d'espacement D3 est inférieure à la longueur L3 et il en résulte un chevauchement des lignes de soufflage 3 selon l'axe Y, c'est-à-dire, par projection selon l'axe X sur l'axe Y. De manière préférée, le rapport L3/D3 est inférieur à 2, de préférence 1.5, pour éviter la formation de portion angulaire dégivrée de manière excessive et la perte de surface traitée acoustiquement. Par la suite, on définit une zone de chevauchement ZP de longueur ZP3 égale à L3-D3. Une zone de chevauchement ZP comporte, par définition, au moins une partie d'une ligne de soufflage amont 3A et au moins une partie d'une ligne de soufflage aval 3B comme illustré aux figures 8 à 10.

Dans ce premier exemple, en référence à la figure 8, chaque ligne de soufflage 3A, 3B comporte des ouvertures traversantes 4A, 4B. De manière préférée, la longueur ZP3 de la zone de chevauchement ZP est réduite afin de ne pas pénaliser les performances par alignement des ouvertures traversantes 4 selon l'axe X. Une telle forme de réalisation permet de maximiser les performances de dégivrage en multipliant les flux élémentaires Fe. Aussi, dans cette forme de réalisation, la densité d'ouvertures traversantes 4 est plus importante dans une zone de chevauchement ZP.

Selon une forme de réalisation alternative, en référence à la figure 9, seule la partie de ligne de soufflage amont 3A dans la zone de chevauchement ZP comporte des ouvertures traversantes 4A, la partie de ligne de soufflage aval 3B dans la zone de chevauchement ZP ne comporte pas d'ouvertures traversantes. Ainsi, seule la ligne de soufflage amont 3A participe au dégivrage de la zone de chevauchement ZP, ce qui permet de limiter la consommation d'air chaud pour le dégivrage. Aussi, dans cette forme de réalisation, la densité angulaire d'ouvertures traversantes 4 est constante aussi bien dans une zone de chevauchement ZP qu'en dehors.

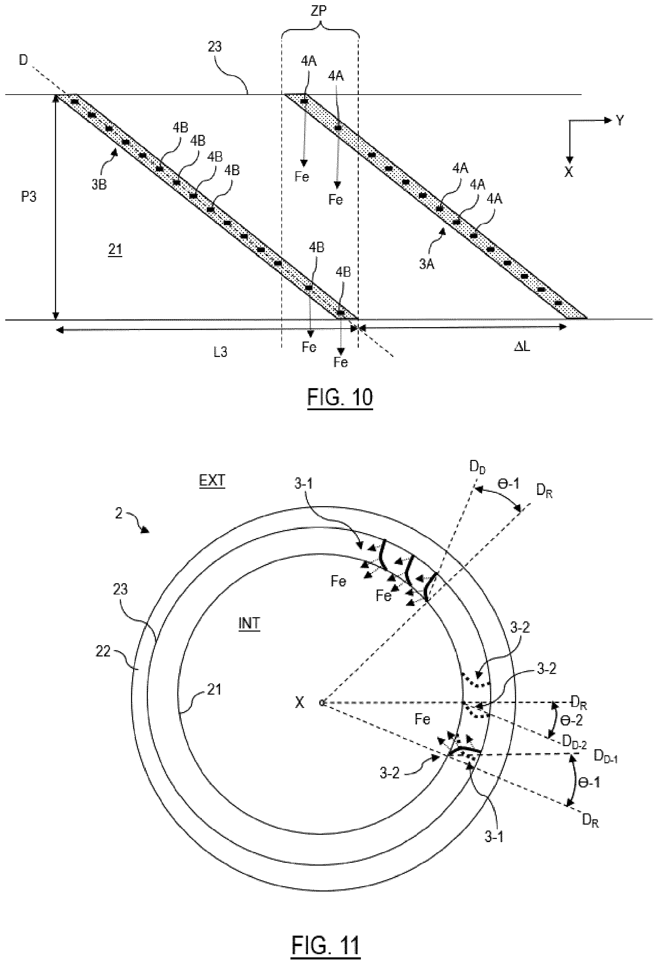

Selon une autre forme de réalisation alternative, en référence à la figure 10, chaque partie de ligne de soufflage 3A, 3B appartenant à la zone de chevauchement ZP comporte des ouvertures traversantes 4A, 4B. Néanmoins, selon la direction Y, les ouvertures traversantes 4A, 4B sont alternées de manière à conserver une densité d'ouvertures traversantes 4 constante aussi bien dans une zone de chevauchement ZP qu'en dehors. Les performances de dégivrage sont ainsi optimisées et le dégivrage est réparti en la ligne de soufflage amont 3A et la ligne de soufflage aval 3B.

De manière préférée, une zone de chevauchement ZP ne comporte pas plus de deux lignes de soufflage 3 afin de permettre de maximiser l'atténuation acoustique.

Il a été présenté précédemment en référence à la figure 5 une paroi intérieure 21 comportant une pluralité de lignes de soufflage 3 qui sont parallèles entre elles dans le plan de projection cylindrique P et dont chaque ligne de soufflage 3 est écartée d'un angle d'inclinaison θ par rapport à l'axe X dans le plan de projection cylindrique P.

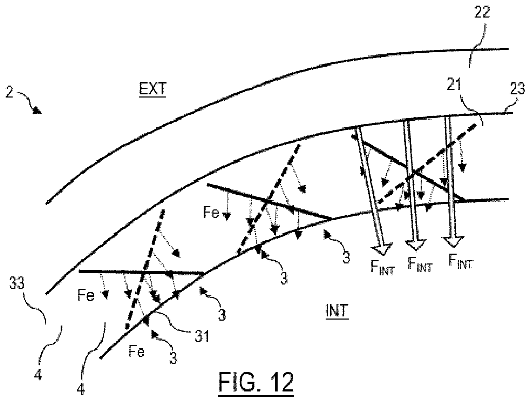

Dans une autre forme de réalisation de l'invention, en référence aux figures 11 et 12, la paroi intérieure 21 comporte une première pluralité de ligne de soufflage 3-1 et une deuxième pluralité de lignes de soufflage 3-2, chacune comportant des ouvertures traversantes 4-1, 4-2. De manière préférée, chaque première ligne de soufflage 3-1 est écartée d'un premier angle d'inclinaison θ-1 par rapport à l'axe X dans le plan de projection cylindrique P tandis que chaque deuxième ligne de soufflage 3-2 est écartée d'un deuxième angle d'inclinaison θ-2 par rapport à l'axe X dans le plan de projection cylindrique P.

Dans cet exemple de réalisation, le premier angle d'inclinaison θ-1 et le deuxième angle d'inclinaison θ-2 possèdent des signes différents de manière fournir des dégivrages différents. L'utilisation de deux pluralités de lignes de soufflage 3-1, 3-2 permet un dégivrage synergique entre les flux élémentaires Fe issus des différentes pluralités de lignes de soufflage 3-1, 3-2. Il va de soi que la paroi intérieure 21 pourrait comporter plus de deux pluralités de lignes de soufflage 3-1, 3-2.

En fonctionnement, la source d'air chaud 9 alimente les lignes de soufflage 3 qui permettent de chauffer par conduction la paroi intérieure 21 lorsque l'air chaud circule dans les canaux de conduction 51 de la structure alvéolaire 50 dont les lignes de soufflage 3 ont la forme. En outre, la source d'air chaud 9 alimente les ouvertures traversantes 4 des lignes de soufflage 3 qui permettent de chauffer par conduction. Comme ces dernières sont réparties à la périphérie de la paroi intérieure 21, le dégivrage est réalisé de manière homogène. L'inclinaison des lignes de soufflage 3 ainsi que l'écartement judicieux des lignes de soufflage 3 entre elles permet d'éviter que de nombreuses ouvertures traversantes 4 soient alignées selon l'axe X ce qui pénaliserait les performances de dégivrage. Ainsi, chaque ouverture traversante 4 émet un flux élémentaire Fe d'air chaud qui est guidé selon l'axe X par le flux d'air intérieur F_{INT} du turboréacteur 1 afin de dégivrer, par convection et conduction, une portion de la paroi intérieure située en aval de l'ouverture traversante 4.

Toute ligne de courant intercepte ainsi au moins une ligne de soufflage 3, ce qui permet un dégivrage optimal même si le nombre de lignes de soufflage 3 est réduit. Contrairement à l'art antérieur qui enseignait un chauffage uniforme, seules quelques lignes de soufflage 3 locales permettent un dégivrage global. L'écartement des lignes de soufflage 3 est avantageux étant donné qu'il permet de rendre liquide tout givre accumulé sans permettre une retransformation en glace lors de sa circulation vers l'aval.

## Revendications

1. Entrée d'air (2) d'une nacelle de turboréacteur (1) d'aéronef comportant un dispositif de dégivrage et s'étendant selon un axe X dans lequel circule un flux d'air (F) d'amont vers l'aval, l'entrée d'air (2) s'étendant de manière annulaire autour de l'axe X et comportant une paroi intérieure (21) tournée vers l'axe X et une paroi extérieure (22) qui est opposée à la paroi intérieure (21), les parois (21, 22) étant reliées par un bord d'attaque (23) et une cloison interne avant (25) de manière à délimiter une cavité annulaire (24), le dispositif de dégivrage comportant au moins une source d'air chaud (9) dans la cavité annulaire (24), **entrée d'air caractérisée par le fait que** la paroi intérieure (21) comporte une pluralité de lignes de soufflage (3), la paroi intérieure (21) comportant au moins une structure d'atténuation acoustique comportant une pluralité d'orifices d'atténuation acoustique (5), les orifices d'atténuation acoustique (5) étant répartis sur la paroi intérieure (21) en dehors des lignes de soufflage (3), chaque ligne de soufflage (3) comportant une pluralité d'ouvertures traversantes (4) configurées pour souffler des flux élémentaires (Fe) issus de la source d'air chaud (9) afin de dégivrer ladite paroi intérieure (21), les lignes de soufflage (3) étant parallèles entre elles dans un plan de projection cylindrique (P) défini par rapport à l'axe X du turboréacteur et à un axe Y définissant la position angulaire par rapport à l'axe X, chaque ligne de soufflage (3) ayant une profondeur P3 définie selon l'axe X et une longueur L3 définie selon l'axe Y dans le plan de projection cylindrique (P), deux lignes de soufflage (3) adjacentes étant écartées d'une distance D3 selon l'axe Y, le rapport des distances L3/D3 étant compris entre 1 et 2.

2. Entrée d'air selon la revendication 1, dans laquelle chaque ligne de soufflage (3) étant écartée d'un angle d'inclinaison (θ) par rapport à l'axe X dans le plan de projection cylindrique (P), l'angle d'inclinaison (θ) est compris entre 20° et 70°.

3. Entrée d'air selon l'une des revendications 1 à 2, dans laquelle la paroi intérieure (21) comprend au moins une zone de chevauchement ZP des lignes de soufflage (3), la zone de chevauchement ZP comprenant au moins une ligne de soufflage amont (3A) et une ligne de soufflage aval (3B).

4. Entrée d'air selon la revendication 3, dans laquelle la ligne de soufflage aval (3B) est exempte d'ouvertures traversantes (4) dans la zone de chevauchement ZP.

5. Entrée d'air selon l'une des revendications 3 à 4, dans laquelle les ouvertures traversantes (4) sont alternées selon la direction Y entre la ligne de soufflage amont (3A) et la ligne de soufflage aval (3B).

6. Entrée d'air selon l'une des revendications 1 à 5, dans laquelle, la densité d'ouvertures traversantes (4) est constante selon la direction Y.

7. Entrée d'air selon l'une des revendications 1 à 6, dans laquelle la structure d'atténuation acoustique est alvéolaire (50) et définit, d'une part, des cellules acoustiques comportant chacune au moins un orifice d'atténuation acoustique (5) et, d'autre part, des canaux de circulation (51) formant les lignes de soufflage (3) comportant les ouvertures traversantes (4) de soufflage.

8. Entrée d'air selon l'une des revendications 1 à 7, dans laquelle chaque ouverture traversante (4) possède une section supérieure à 3mm².

9. Entrée d'air selon l'une des revendications 1 à 8, dans laquelle chaque orifice d'atténuation acoustique (5) possède un diamètre inférieur à 0,5mm.

10. Entrée d'air selon l'une des revendications 1 à 9, dans laquelle les ouvertures traversantes (4) sont réparties de manière irrégulière selon l'axe X et selon l'axe Y dans le plan de projection cylindrique (P).

11. Entrée d'air selon l'une des revendications 1 à 10, dans laquelle chaque ligne de soufflage (3) comporte au moins 5 ouvertures traversantes (4), de préférence, au moins 10 ouvertures traversantes (4), de préférence, au moins 15 ouvertures traversantes (4).

12. Procédé de dégivrage d'une entrée d'air (2) d'une nacelle de turboréacteur (1) d'aéronef, selon l'une des revendications 1 à 11, s'étendant selon un axe X dans lequel circule un flux d'air (F) d'amont vers l'aval, l'entrée d'air (2) s'étendant de manière annulaire autour de l'axe X et comportant une paroi intérieure (21) tournée vers l'axe X et une paroi extérieure (22) qui est opposée à la paroi intérieure (21), le procédé comportant une étape de soufflage d'une pluralité de flux élémentaires (Fe) issus de la source d'air chaud (9) par les ouvertures traversantes (4) des lignes de soufflage (3) de manière à dégivrer la paroi intérieure (21).

## Patentansprüche

1. Lufteinlass (2) einer Gondel eines Flugzeugstrahltriebwerks (1), aufweisend eine Enteisungsvorrichtung und sich erstreckend gemäß einer Achse X, in der ein Luftstrom (F) von vorn nach hinten zirkuliert, wobei sich der Lufteinlass (2) ringförmig um die Achse X erstreckt und eine Innenwand (21) aufweist, die zur Achse X gedreht ist, und eine Außenwand (22), die der Innenwand (21) gegenüberliegt, wobei die Wände (21, 22) durch eine Vorderkante (23) und eine vordere innere Trennwand (25) derart verbunden sind, dass ein ringförmiger Hohlraum (24) begrenzt wird, wobei die Enteisungsvorrichtung mindestens eine Warmluftquelle (9) im ringförmigen Hohlraum (24) aufweist, wobei der Lufteinlass **dadurch gekennzeichnet ist, dass** die Innenwand (21) eine Vielzahl von Blasleitungen (3) aufweist, wobei die Innenwand (21) mindestens eine Schalldämpfungsstruktur aufweist, die eine Vielzahl von Schalldämpfungsöffnungen (5) aufweist, wobei die Schalldämpfungsöffnungen (5) auf der Innenwand (21) außerhalb der Blasleitungen (3) verteilt sind, wobei jede Blasleitung (3) eine Vielzahl von Durchgangsöffnungen (4) aufweist, die ausgelegt sind, um Elementarströme (Fe) zu blasen, die von der Warmluftquelle (9) ausgehen, um die Innenwand (21) zu enteisen, wobei die Blasleitungen (3) in einer zylindrischen Projektionsebene (P), die im Verhältnis zur Achse X des Strahltriebwerks definiert ist, und zu einer Achse Y, die die Winkelposition im Verhältnis zur Achse X definiert, parallel zueinander sind, wobei jede Blasleitung (3) eine Tiefe P3 hat, die gemäß der Achse X definiert ist, und eine Länge L3, die gemäß der Achse Y in der zylindrischen Projektionsebene (P) definiert ist, wobei zwei benachbarte Blasleitungen (3) in einem Abstand D3 gemäß der Achse Y beabstandet sind, wobei das Verhältnis der Abstände L3/D3 zwischen 1 und 2 liegt.

2. Lufteinlass nach Anspruch 1, wobei jede Blasleitung (3) in einem Neigungswinkel (θ) im Verhältnis zur Achse X in der zylindrischen Projektionsebene (P) beabstandet ist, wobei der Neigungswinkel (θ) zwischen 20° und 70° liegt.

3. Lufteinlass nach einem der Ansprüche 1 bis 2, wobei die Innenwand (21) mindestens eine Überschneidungszone ZP der Blasleitungen (3) umfasst, wobei die Überschneidungszone ZP mindestens eine vorgelagerte Blasleitung (3A) und eine nachgelagerte Blasleitung (3B) umfasst.

4. Lufteinlass nach Anspruch 3, wobei die nachgelagerte Blasleitung (3B) keine Durchgangsöffnungen (4) in der Überschneidungszone ZP hat.

5. Lufteinlass nach einem der Ansprüche 3 bis 4, wobei sich die Durchgangsöffnungen (4) gemäß der Richtung Y zwischen der vorgelagerten Blasleitung (3A) und der nachgelagerten Blasleitung (3B) abwechseln.

6. Lufteinlass nach einem der Ansprüche 1 bis 5, wobei die Dichte der Durchgangsöffnungen (4) gemäß der Richtung Y konstant ist.

7. Lufteinlass nach einem der Ansprüche 1 bis 6, wobei die Schalldämpfungsstruktur eine Wabenstruktur (50) ist, und zum einen Schallzellen, die jeweils mindestens eine Schalldämpfungsöffnung (5) aufweisen, und zum anderen Zirkulationskanäle (51) definiert, die die Blasleitungen (3) bilden, die die Durchgangsöffnungen (4) zum Blasen aufweisen.

8. Lufteinlass nach einem der Ansprüche 1 bis 7, wobei jede Durchgangsöffnung (4) einen Querschnitt von über 3 mm² besitzt.

9. Lufteinlass nach einem der Ansprüche 1 bis 8, wobei jede Schalldämpfungsöffnung (5) einen Durchmesser kleiner als 0,5 mm besitzt.

10. Lufteinlass nach einem der Ansprüche 1 bis 9, wobei die Durchgangsöffnungen (4) ungleichmäßig gemäß der Achse X und gemäß der Achse Y in der zylindrischen Projektionsebene (P) verteilt sind.

11. Lufteinlass nach einem der Ansprüche 1 bis 10, wobei jede Blasleitung (3) mindestens 5 Durchgangsöffnungen (4), vorzugsweise mindestens 10 Durchgangsöffnungen (4), vorzugsweise mindestens 15 Durchgangsöffnungen (4) aufweist.

12. Verfahren zum Enteisen eines Lufteinlasses (2) einer Gondel eines Flugzeugstrahltriebwerks (1) nach einem der Ansprüche 1 bis 11, der sich gemäß einer Achse X erstreckt, in der ein Luftstrom (F) von vorn nach hinten zirkuliert, wobei sich der Lufteinlass (2) ringförmig um die Achse X erstreckt und eine Innenwand (21) aufweist, die zur Achse X gedreht ist, und eine Außenwand (22), die der Innenwand (21) gegenüberliegt, wobei das Verfahren einen Schritt des Blasens einer Vielzahl von Elementarströmen (Fe), die von der Warmluftquelle (9) ausgehen, durch die Durchgangsöffnungen (4) der Blasleitungen (3) aufweist, so dass die Innenwand (21) enteist wird.

## Claims

1. An air intake (2) of a turbojet engine (1) nacelle of an aircraft comprising a deicing device and extending along an axis X in which an air flow (F) circulates from upstream to downstream, the air intake (2) annularly extending about axis X and comprising an internal wall (21) pointing to axis X and an external wall (22) which is opposite to the internal wall (21), the walls (21, 22) being connected by a leading edge (23) and a front internal partition wall (25) so as to delimit an annular cavity (24), the deicing device comprising at least one hot air source (9) in the annular cavity (24), the air intake being **characterized in that** the internal wall (21) comprises a plurality of blowing lines (3), the internal wall (21) comprising at least one acoustic attenuation structure comprising a plurality of acoustic attenuation orifices (5), the acoustic attenuation orifices (5) being distributed on the internal wall (21) outside the blowing lines (3), each blowing line (3) comprising a plurality of through openings (4) configured to blow elementary flows (Fe) coming from the hot air source (9) in order to deice said internal wall (21), the blowing lines (3) being parallel to each other in a cylindrical projection plane (P) defined with respect to axis X of the turbojet engine and to an axis Y defining the angular position with respect to axis X, each blowing line (3) having a depth P3 defined along axis X and a length L3 defined along axis Y in the cylindrical projection plane (P), two adjacent blowing lines (3) being spaced apart by a distance D3 along axis Y, the distance ratio L3/D3 being between 1 and 2.

2. The air intake according to claim 1, wherein with each blowing line (3) being spaced by a tilt angle (θ) with respect to axis X in the cylindrical projection plane (P), the tilt angle (θ) is between 20° and 70°.

3. The air intake according to one of claims 1 to 2, wherein the internal wall (21) comprises at least one overlapping zone ZP of the blowing lines (3), the overlapping zone ZP comprising at least an upstream blowing line (3A) and a downstream blowing line (3B).

4. The air intake according to claim 3, wherein the downstream blowing line (3B) is free of through openings (4) in the overlapping zone ZP.

5. The air intake according to one of claims 3 to 4, wherein the through openings (4) are alternating along direction Y between the upstream blowing line (3A) and the downstream blowing line (3B).

6. The air intake according to one of claims 1 to 5, wherein, the density of through openings (4) is constant along direction Y.

7. The air intake according to one of claims 1 to 6, in which the acoustic attenuation structure is a honeycomb structure (50) and defines, on the one hand, acoustic cells each comprising at least one acoustic attenuation orifice (5) and, on the other hand, circulation channels (51) forming the blowing lines (3) comprising the through openings (4) for blowing.

8. The air intake according to one of the claims 1 to 7, wherein each through opening (4) has a cross-sectional area greater than 3mm².

9. The air intake according to one of the claims 1 to 8, wherein each acoustic attenuation orifice (5) has a diameter of less than 0.5mm.

10. The air intake according to one of claims 1 to 9, wherein the through openings (4) are irregularly distributed along axis X and along axis Y in the cylindrical projection plane (P).

11. The air intake according to one of claims 1 to 10, in each blowing line (3) comprises at least 5 through openings (4), preferably at least 10 through openings (4), preferably at least 15 through openings (4).

12. A method for deicing an air intake (2) of a turbojet engine (1) nacelle of an aircraft according to one of claims 1 to 11, extending along an axis X in which an air flow (F) circulates from upstream to downstream, the air intake (2) annularly extending about axis X and comprising an internal wall (21) pointing to axis X and an external wall (22) which is opposite to the internal wall (21), the method comprising a step of blowing a plurality of elementary flows (Fe) from the hot air source (9) through the through openings (4) of the blowing lines (3) so as to deice the internal wall (21).
